# FASCICULE DE BREVET EUROPEEN

(11) **EP 3 778 276 B1**
(45) Date de publication et mention de la délivrance du brevet: **23.02.2022**
(21) Numéro de dépôt: 20190390.3
(22) Date de dépôt: 11.08.2020
(51) Int. Cl.: B60J 1/10, B61D 25/00, B60J 3/04

(54) **FENÊTRE FORMANT ISSUE DE SECOURS DE VÉHICULE DE TRANSPORT PUBLIC**
FENSTER, DAS EINEN NOTAUSGANG EINES ÖFFENTLICHEN TRANSPORTFAHRZEUGS BILDET
WINDOW FORMING AN EMERGENCY EXIT OF A PUBLIC TRANSPORT VEHICLE

(30) Priorité: 12.08.2019 FR 1909152
(43) Date de publication de la demande: 17.02.2021
(73) Titulaire: SpeedInnov, 75008 Paris (FR)
(72) Inventeur: PAILLER, Christophe, 17180 PERIGNY (FR); SIMONI, Bastian, 94130 NOGENT SUR MARNE (FR)
(74) Mandataire: Lavoix

(56) Documents cités:
- EP-A2- 0 679 793
- WO-A1-2014/121809
- CN-U- 202 953 942
- DE-U1-202016 106 808

## Description

La présente invention concerne une fenêtre formant issue de secours de véhicule de transport public.

Il est courant, voire obligatoire dans certains cas où des normes s'appliquent, d'équiper les véhicules de transport public de fenêtres formant issue de secours.

Des fenêtres formant issue de secours connues comportent une zone centrale indéchirable et infranchissable et une zone périphérique brisable.

En cas d'urgence, de telles fenêtres peuvent être brisées sans danger en frappant sur la zone périphérique, et expulsées vers l'extérieur par les usagers d'un véhicule pour permettre ainsi l'évacuation du véhicule.

Cependant, de telles fenêtres formant issue de secours ne donnent pas entière satisfaction. En effet, en dehors de la fonction propre à une fenêtre de permettre à des usagers de voir au travers, elles n'ont que la fonction d'issue de secours.

DE 20 2016 106808 U1 décrit une vitre pour une fenêtre de secours d'un véhicule de transport de passagers comprenant une portion périphérique configurée pour être fixée à un encadrement de fenêtre du véhicule délimitant une ouverture de fenêtre, une portion structurelle s'étendant le long de la majeure partie de ladite ouverture, et au moins une portion frangible s'étendant autour de la portion structurelle à proximité de la portion périphérique et configurée pour se briser sous l'effet d'une force concentrée agissant sur celle-ci.

WO 2014/121809 A1 décrit une construction de fenêtre, destinée à être utilisée en particulier dans un train, un véhicule, une voiture, un hélicoptère, un aéronef ou un bâtiment, qui comprend un vitrage feuilleté de fenêtre possédant un moyen électriquement commutable en couche disposé dans un stratifié, et un moyen de commande accouplé au moyen commutable en couche pour commander la transparence à la lumière solaire du moyen commutable en couche.

EP 0 679 793 A2 décrit une vitre en verre facilement cassable pour issues de secours ou similaires, comprenant au moins une première feuille qui est pourvue d'au moins une découpe et est jointe à au moins une deuxième feuille sans découpe.

CN202953942 U concerne une structure de vitre de fenêtre d'évacuation d'urgence d'une unité de train à moteur à grande vitesse. La structure de la vitre d'évacuation d'urgence de l'unité de train à grande vitesse est une structure creuse composée d'une couche de verre interne, d'une couche d'air et d'une couche de verre externe, dans laquelle la couche de verre externe est une structure sandwich composée d'un verre intermédiaire disposé sur le côté interne, d'une membrane en butyral de polyvinyle (PVB) au milieu et d'une couche de verre externe disposée sur le côté externe. L'invention a notamment pour but d'améliorer les fenêtres formant issue de secours en proposant une fenêtre formant issue de secours combinant une pluralité de fonctions favorisant le confort des usagers tout en garantissant leur sécurité.

A cet effet, l'invention a pour objet une fenêtre formant issue de secours de véhicule de transport public, comprenant un vitrage, caractérisée en ce que le vitrage comporte :
- au moins une première zone à opacité variable,
- au moins une deuxième zone brisable, susceptible d'être brisée en vue d'autoriser le passage de personnes au travers de la fenêtre, et
- au moins une troisième zone transparente ou translucide à opacité fixe et résistante à un bris du vitrage, la troisième zone du vitrage comprend un verre feuilleté formé d'au moins deux feuilles de verre superposées et un film intercalaire disposé entre deux feuilles de verre superposées successives du verre feuilleté|.

Une fenêtre selon l'invention peut comporter en outre l'une ou plusieurs des caractéristiques suivantes, prises seules ou selon toutes combinaisons techniquement envisageables :
- la première zone s'étend sur au moins 70% du vitrage ;
- la deuxième zone s'étend en périphérie de la première zone, et la troisième zone s'étend en périphérie de la deuxième zone ;
- la première zone du vitrage comporte un film à opacité variable électro-commandé, notamment du type dispositif à particules en suspension (« SPD », ou « suspended particle device » en anglais), l'opacité de la première zone du vitrage étant commutable de l'état opaque à l'état transparent par application d'une première tension électrique entre deux faces opposées dudit film, et commutable de l'état transparent à l'état opaque par application d'une deuxième tension électrique, distincte de la première tension, audit film ;
- la deuxième zone du vitrage comprend un verre feuilleté formé d'au moins deux feuilles de verre superposées, la deuxième zone étant dépourvue de film intercalaire disposé entre deux feuilles de verre superposées successives du verre feuilleté ;
- le film intercalaire est réalisé en polybutyral de vinyle (« PVB ») ;
- la deuxième zone du vitrage présente au moins un point de moindre résistance, permettant d'initier un bris du vitrage en vue d'autoriser le passage de personnes au travers de la fenêtre ;
- la fenêtre s'étend suivant une direction longitudinale principale et présentant une longueur définie dans cette direction, et dans laquelle le point de moindre résistance est sensiblement agencé à la moitié de la longueur de la fenêtre.

La présente invention a également pour objet un véhicule de transport public comprenant une telle fenêtre issue de secours.

L'invention sera mieux comprise à la lecture de la description qui va suivre, donnée uniquement à titre d'exemple et faite en se référant aux figures annexées, sur lesquelles :
- la Figure 1 représente schématiquement une vue en coupe longitudinale d'un véhicule de transport public comprenant des fenêtres selon un exemple de mode de réalisation de l'invention ; et
- la Figure 2 représente schématiquement une vue en coupe transversale d'une fenêtre du véhicule de la figure 1.

Dans la description qui va suivre, les termes « extérieur », « intérieur », « haut », « bas » sont à entendre en référence au sens usuel des véhicules ferroviaires.

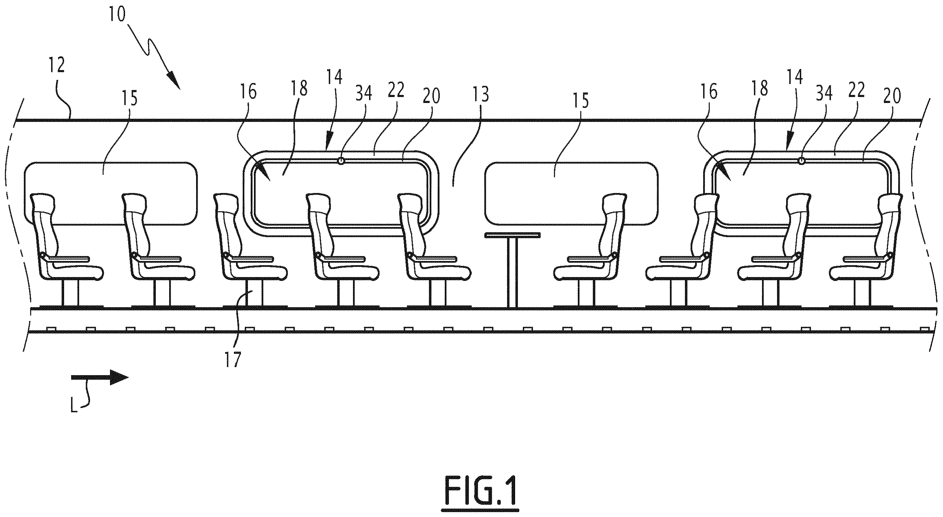

On a représenté partiellement, sur la figure 1, un véhicule de transport public 10. Par exemple, le véhicule de transport public 10 est un véhicule ferroviaire.

Le véhicule ferroviaire 10 comporte au moins une caisse 12 comprenant deux parois latérales 13 (dont l'une est représentée sur la figure 1). Le véhicule ferroviaire 10 s'étend suivant une direction longitudinale principale L. La paroi latérale 13 comporte au moins une fenêtre 14, 15, généralement une pluralité de fenêtres 14, 15.

De préférence, le véhicule 10 comporte une pluralité de sièges 17.

Sur la figure 1, deux des quatre fenêtres 14, 15 sont des fenêtres 14 formant issue de secours. En variante, toutes les fenêtres sont des fenêtres 14 formant issue de secours.

Chaque fenêtre 14 formant issue de secours comporte un vitrage 16.

Le vitrage 16 comporte une première zone 18 à opacité variable, une deuxième zone 20 brisable, susceptible d'être brisée en vue d'autoriser le passage de personnes et une troisième zone 22 résistante au bris et translucide ou transparente à opacité fixe.

L'opacité de la première zone 18 du vitrage 16 est ajustable entre un état transparent et un état opaque à la lumière. Ici, on désigne par état transparent à la lumière un état dans lequel la première zone 18 du vitrage 16 est transparente ou quasi-transparente pour les ondes lumineuses dans le domaine visible, par exemple présente un facteur de transmission compris entre 35 % et 45 %. Par ailleurs, on désigne par état opaque à la lumière un état dans lequel la première zone 18 du vitrage 16 est opaque ou quasi-opaque pour les ondes lumineuses dans le domaine visible, par exemple présente un facteur de transmission compris entre 0 % et 5 %.

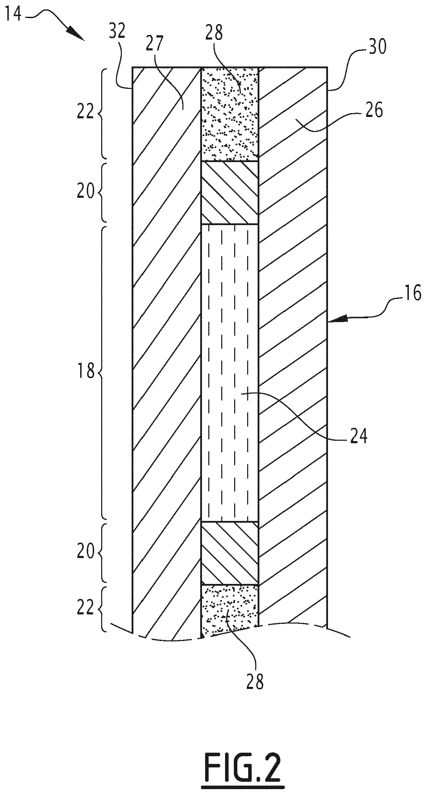

Selon un mode de réalisation avantageux de l'invention, la première zone 18 du vitrage 16 comporte un film à opacité variable 24 (visible sur la figure 2) électro-commandé. Le film à opacité variable 24 est notamment du type dispositif à particules en suspension (« SPD », ou « suspended particle device » en anglais), ou d'autres films présentant une opacité variable.

L'opacité du film à opacité variable 24 est variable en fonction d'une tension appliquée entre les deux faces de ce film 24. La tension électrique appliquée au film à opacité variable 24 est par exemple fournie par un réseau de basse tension du véhicule ferroviaire, et appliqué au moyen de deux films conducteurs (non représentés) disposés de part et d'autre du film à opacité variable 24 et au contact de celui-ci.

Par exemple, l'opacité de la première zone 18 du vitrage 16 est commutable de l'état opaque à l'état transparent par application d'une première tension électrique prédéfinie au film à opacité variable 24, et commutable de l'état transparent à l'état opaque par application d'une deuxième tension électrique, par exemple une tension nulle, au film à opacité variable 24.

Avantageusement, l'opacité de la première zone 18 du vitrage 16 est également ajustable entre une pluralité d'états partiellement opaques en faisant varier la tension appliquée au film à opacité variable 24 entre la première et la deuxième tensions électriques.

La première zone 18 du vitrage 16 comprend par exemple un verre feuilleté.

Le verre feuilleté comporte une feuille de verre extérieure 26 et une feuille de verre intérieure 27 disposées de part et d'autre du film à opacité variable 24.

De préférence, la première zone 18 du vitrage 16 s'étend sur au moins 70% du vitrage 16. De manière encore plus préférée, la première zone 18 du vitrage 16 s'étend sur au moins 80% du vitrage 16. La première zone du vitrage 16 est centrée sur le vitrage 16.

De cette manière, un usager peut faire varier l'opacité de la première zone 18 du vitrage 16 à sa guise.

La première zone 18 du vitrage 16 est incassable, elle ne peut être franchie en cas de bris de la fenêtre 14.

La troisième zone 22 du vitrage 16 comprend par exemple la feuille de verre extérieure 26, la feuille de verre intérieure 27 et un film intercalaire 28.

La feuille de verre extérieure 26 définit une surface externe 30 et la feuille de verre intérieure 27 définit une surface interne 32.

Le film intercalaire 28 est interposé entre les feuilles de verre extérieure 26 et intérieure 27.

Le film intercalaire 28 est généralement un film destiné à assurer l'intégrité mécanique de la feuille de verre extérieure 26, notamment en case de choc. Le film intercalaire 28 est par exemple réalisé en polybutyral de vinyle.

Ainsi, la troisième zone 22 du vitrage 16 est incassable, elle ne peut être franchie en cas de bris de la fenêtre 14.

En variante, le verre feuilleté comprend au moins trois feuilles de verre, et une pluralité de films intercalaires, chaque film intercalaire étant disposé entre deux feuilles de verre successives.

La troisième zone 22 du vitrage 16 est dépourvue de film à opacité variable.

De préférence, la troisième zone 22 du vitrage 16 s'étend sur 10% à 20% du vitrage 16.

La deuxième zone 20 du vitrage 16 est disposée entre la première zone 18 et la troisième zone 22 du vitrage 16 de sorte que la deuxième zone 20 entoure la première zone 18, et la troisième zone 22 entoure la deuxième zone 20.

En d'autres termes, la deuxième zone 20 s'étend en périphérie de la première zone 18, et la troisième zone 22 s'étend en périphérie de la deuxième zone 20.

De préférence, la deuxième zone 20 du vitrage 16 s'étend sur 5% à 10% du vitrage 16.

La deuxième zone 20 du vitrage 16 comprend par exemple la feuille de verre extérieure 26 et la feuille de verre intérieure 27.

La deuxième zone 20 du vitrage 16 est dépourvue de film intercalaire 28 et de film à opacité variable 24.

De cette façon, la deuxième zone 20 du vitrage 16 constitue une zone de faiblesse du vitrage 16 qu'il est possible de briser en cas d'urgence.

Avantageusement, la fenêtre 14 formant issue de secours comprend également un point de moindre résistance 34.

De préférence, le vitrage comporte une marque au point de moindre résistance, permettant d'indiquer visuellement à un usager un endroit où frapper le vitrage 16 à l'aide d'un marteau brise-vitre en cas d'urgence.

Le point de moindre résistance 34 est disposé dans la deuxième zone 20 du vitrage 16. De cette façon, le point de moindre résistance 34 indique à un usager de frapper sur la zone brisable du vitrage 16.

De préférence, le point de moindre résistance 34 est disposé sensiblement à la moitié de la longueur du vitrage 16 définie suivant la direction longitudinale L sur la partie haute du vitrage 16. De cette façon, l'accessibilité du point de moindre résistance 34 est optimale.

En fonctionnement normal, les trois zones du vitrage 18, 20, 22 sont solidaires les unes des autres.

Une évacuation du véhicule de transport public 10 à l'aide de la fenêtre 14 formant issue de secours selon l'invention va maintenant être décrite.

Un usager frappe le vitrage 16 au niveau du point de moindre résistance 34 afin d'initier un bris du vitrage.

Au fur et à mesure que l'usager frappe, le vitrage 16 se fissure en suivant la deuxième zone du vitrage 20 afin de désolidariser la première zone 18 de la troisième zone 22 toutes deux résistantes au bris. L'usager pousse ensuite le vitrage 16 vers l'extérieur et peut évacuer le véhicule.

Ainsi, la fenêtre selon l'invention offre à la fois la fonction d'issue de secours permettant aux passagers de quitter le véhicule en cas d'urgence, ainsi que le confort d'une fenêtre à opacité variable permettant d'ajuster la luminosité dans le véhicule en fonction de la luminosité extérieure et/ou en fonction des souhaits des passagers et de leurs activités.

La fenêtre selon l'invention permet en outre d'homogénéiser une salle d'un véhicule de transport public en comparaison avec un véhicule comprenant des fenêtres formant issue de secours et des fenêtres à opacité variable distinctes des fenêtres formant issue de secours.

## Revendications

1. Fenêtre (14) formant issue de secours de véhicule de transport public (10), comprenant un vitrage (16), **caractérisée en ce que** le vitrage (16) comporte :
- au moins une première zone (18) à opacité variable,
- au moins une deuxième zone (20) brisable, susceptible d'être brisée en vue d'autoriser le passage de personnes au travers de la fenêtre (14), et
- au moins une troisième zone (22) transparente ou translucide à opacité fixe et résistante à un bris du vitrage (16),
dans laquelle la troisième zone (22) du vitrage (16) comprend un verre feuilleté formé d'au moins deux feuilles de verre (26, 27) superposées et un film intercalaire (28) disposé entre deux feuilles de verre (26, 27) superposées successives du verre feuilleté.

2. Fenêtre (14) formant issue de secours selon la revendication 1, dans laquelle la première zone (18) s'étend sur au moins 70% du vitrage (16).

3. Fenêtre (14) formant issue de secours selon la revendication 1 ou 2, dans laquelle la deuxième zone (20) s'étend en périphérie de la première zone (18), et la troisième zone (22) s'étend en périphérie de la deuxième zone (20).

4. Fenêtre (14) formant issue de secours selon l'une quelconque des revendications 1 à 3, dans laquelle la première zone (18) du vitrage (16) comporte un film à opacité variable (24) électro-commandé, notamment du type dispositif à particules en suspension (« SPD », ou « suspended particle device » en anglais), l'opacité de la première zone (18) du vitrage (16) étant commutable de l'état opaque à l'état transparent par application d'une première tension électrique entre deux faces opposées dudit film (24), et commutable de l'état transparent à l'état opaque par application d'une deuxième tension électrique, distincte de la première tension, audit film (24).

5. Fenêtre (14) formant issue de secours selon l'une quelconque des revendications 1 à 4, dans laquelle la deuxième zone (20) du vitrage (16) comprend un verre feuilleté formé d'au moins deux feuilles de verre (26, 27) superposées, la deuxième zone (20) étant dépourvue de film intercalaire disposé entre deux feuilles de verre (26, 27) superposées successives du verre feuilleté.

6. Fenêtre (14) formant issue de secours selon l'une quelconque des revendications 1 à 5, dans laquelle le film intercalaire (28) est réalisé en polybutyral de vinyle (« PVB »).

7. Fenêtre (14) formant issue de secours selon l'une quelconque des revendications 1 à 6, dans laquelle la deuxième zone (20) du vitrage (16) présente au moins un point de moindre résistance (34), permettant d'initier un bris du vitrage (16) en vue d'autoriser le passage de personnes au travers de la fenêtre (14).

8. Fenêtre (14) formant issue de secours selon la revendication 7, s'étendant suivant une direction longitudinale principale (L) et présentant une longueur définie dans cette direction, et dans laquelle le point de moindre résistance (34) est sensiblement agencé à la moitié de la longueur de la fenêtre (14).

9. Véhicule de transport public (10), **caractérisé en ce qu'**il comporte au moins une fenêtre (14) issue de secours selon l'une quelconque des revendications 1 à 8.

## Patentansprüche

1. Fenster (14), das einen Notausstieg eines öffentlichen Transportfahrzeugs (10) bildet, umfassend eine Verglasung (16), **dadurch gekennzeichnet, dass** die Verglasung (16) Folgendes umfasst:
- mindestens einen ersten Bereich (18) mit variabler Opazität,
- mindestens einen zweiten aufbrechbaren Bereich (20), der aufgebrochen werden kann, um den Durchgang von Personen durch das Fenster (14) zu ermöglichen, und
- mindestens einen dritten transparenten oder lichtdurchlässigen Bereich (22) mit fester Opazität und der einem Bruch der Verglasung (16) standhält, wobei der dritte Bereich (22) der Verglasung (16) ein Verbundglas umfasst, gebildet aus mindestens zwei übereinander liegenden Glasscheiben (26, 27) und einer eingefügten Folie (28), die zwischen zwei aufeinanderfolgenden übereinander liegenden Glasscheiben (26, 27) aus Verbundglas angeordnet ist.

2. Fenster (14), das einen Notausstieg bildet, nach Anspruch 1, wobei sich der erste Bereich (18) über mindestens 70 % der Verglasung (16) erstreckt.

3. Fenster (14), das einen Notausstieg bildet, nach Anspruch 1 oder 2, wobei sich der zweite Bereich (20) um den Umfang des ersten Bereichs (18) erstreckt und sich der dritte Bereich (22) um den Umfang des zweiten Bereichs (20) erstreckt.

4. Fenster (14), das einen Notausstieg bildet, nach einem der Ansprüche 1 bis 3, wobei dem der erste Bereich (18) der Verglasung (16) eine elektrogesteuerte Folie variabler Opazität (24) umfasst, insbesondere vom Typ elektrochromatische Vorrichtung ("SPD" oder "suspended particle device" auf Englisch), wobei die Opazität des ersten Bereichs (18) der Verglasung (16) durch Anlegen einer ersten elektrischen Spannung zwischen zwei gegenüberliegenden Seiten der Folie (24) von dem undurchsichtigen Zustand in den durchsichtigen Zustand umschaltbar ist und durch Anlegen einer zweiten elektrischen Spannung, die sich von der ersten Spannung unterscheidet, an die Folie (24) von dem durchsichtigen Zustand in den undurchsichtigen Zustand umschaltbar ist.

5. Fenster (14), das einen Notausstieg bildet, nach einem der Ansprüche 1 bis 4, wobei der zweite Bereich (20) der Verglasung (16) ein Verbundglas umfasst, das aus mindestens zwei übereinander liegenden Glasscheiben (26, 27) gebildet ist, wobei der zweite Bereich (20) frei von einer eingefügten Folie ist, die zwischen zwei aufeinanderfolgenden übereinander liegenden Glasscheiben (26, 27) des Verbundglases angeordnet ist.

6. Fenster (14), das einen Notausstieg bildet, nach einem der Ansprüche 1 bis 5, wobei die eingefügte Folie (28) aus Polyvinylbutyral ("PVB") gefertigt ist.

7. Fenster (14), das einen Notausstieg bildet, nach einem der Ansprüche 1 bis 6, wobei der zweite Bereich (20) der Verglasung (16) mindestens einen Punkt geringeren Widerstands (34) aufweist, der es ermöglicht, einen Bruch der Verglasung (16) einzuleiten, um den Durchgang von Personen durch das Fenster (14) zu ermöglichen.

8. Fenster (14), das einen Notausstieg bildet, nach Anspruch 7, das sich entlang einer Hauptlängsrichtung (L) erstreckt und eine in dieser Richtung definierte Länge aufweist, und bei dem der Punkt des geringsten Widerstands (34) im Wesentlichen auf der Hälfte der Länge des Fensters (14) angeordnet ist.

9. Öffentliches Transportfahrzeug (10), **dadurch gekennzeichnet, dass** es mindestens ein Fenster (14), das einen Notausstieg bildet, nach einem der Ansprüche 1 bis 8 umfasst.

## Claims

1. An emergency exit window (14) for a public transport vehicle (10), comprising a pane (16), **characterized in that** the pane (16) comprises:
- at least one first zone (18) with variable opaqueness,
- at least one second breakable zone (20), which may be broken in order to allow the passage of people through the window (14), and
- at least one third transparent or translucent zone (22) with fixed opaqueness and withstanding breaking of the pane (16), wherein the third zone (22) of the pane (16) comprises a laminated glass formed by at least two superimposed sheets of glass (26, 27) and an intermediate film (28) arranged between two successive superimposed sheets (26, 27) of the laminated glass.

2. The emergency exit window (14) according to claim 1, wherein the first zone (18) extends over at least 70% of the pane (16).

3. The emergency exit window (14) according to claim 1 or 2, the second zone (20) extends on the periphery of the first zone (18), and the third zone (22) extends on the periphery of the second zone (20).

4. The emergency exit window (14) according to any one of claims 1 to 3, wherein the first zone (18) of the pane (16) includes a film of electro-controlled variable opaqueness (24), in particular of the suspended particle device (SPD) type, the opaqueness of the first zone (18) of the pane (16) being able to be switched from the opaque state to the transparent state by application of a first electric voltage between two opposite faces of said film (24), and able to be switched from the transparent state to the opaque state by application of a second electric voltage, separate from the first voltage, to said film (24).

5. The emergency exit window (14) according to any one of claims 1 to 4, wherein the second zone (20) of the pane (16) comprises a laminated glass formed by at least two superimposed sheets of glass (26, 27), the second zone (20) being devoid of intermediate film arranged between two successive superimposed sheets (26, 27) of the laminated glass.

6. The emergency exit window (14) according to any one of claims 1 to 5, wherein the intermediate film (28) is made from polyvinyl butyral (PVB).

7. The emergency exit window (14) according to any one of claims 1 to 6, wherein the second zone (20) of the pane (16) has at least one point of least resistance (34), making it possible to initiate breaking of the pane (16) in order to allow the passage of people through the window (14).

8. The emergency exit window (14) according to claim 7, extending along a main longitudinal direction (L) and has a defined length in that direction, and wherein the point of least resistance (34) is substantially arranged halfway along the length of the window (14).

9. A public transport vehicle (10), **characterized in that** it comprises at least one emergency exit window (14) according to any one of claims 1 to 8.
